(19) Europäisches Patentamt
European Patent Office
Office européen des brevets

(11) **EP 3 047 313 B1**

(12) **EUROPEAN PATENT SPECIFICATION**

(45) Date of publication and mention
of the grant of the patent:
**20.01.2021 Bulletin 2021/03**

(21) Application number: **13776427.0**

(22) Date of filing: **16.09.2013**

(51) Int Cl.:
**G02B 5/02** *(2006.01)*     **B01J 13/02** *(2006.01)*

(86) International application number:
**PCT/EP2013/069163**

(87) International publication number:
**WO 2015/036057 (19.03.2015 Gazette 2015/11)**

(54) **LIGHT DIFFUSER COMPRISING A COMPOSITE SYSTEM COMPRISING A POLYMER MATRIX AND CORE-SHELL NANOPARTICLES, AND PROCESS FOR PREPARING IT**

LICHTDIFFUSOR MIT EINEM VERBUNDSYSTEM MIT EINER POLYMERMATRIX UND KERN-HÜLLE-NANOPARTIKELN, UND VERFAHREN ZUR HERSTELLUNG DAVON

DIFFUSEUR DE LUMIÈRE COMPRENANT UN SYSTÈME COMPOSITE COMPRENANT UNE MATRICE POLYMÈRE ET DES NANOPARTICULES COEUR-COQUILLE, ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.07.2016 Bulletin 2016/30**

(73) Proprietor: **CoeLux S.r.l.**
**22074 Lomazzo (CO) (IT)**

(72) Inventors:
- **MENG, Xia**
**Shanghai 200138 (CN)**
- **XIE, Delong**
**CH-8600 Dübendorf (CH)**
- **JIN, Lu**
**CH-8600 Dübendorf (CH)**
- **DI TRAPANI, Paolo**
**I-22020 Cavallasca (CO) (IT)**
- **WU, Hua**
**CH-8600 Dübendorf (CH)**
- **MORBIDELLI, Massimo**
**CH-8046 Zurich (CH)**

(74) Representative: **Spalla, Pietro**
**Studio Torta S.p.A.**
**Via Viotti, 9**
**10121 Torino (IT)**

(56) References cited:
**EP-A1- 0 745 622     EP-A1- 2 020 428**
**EP-A2- 2 345 701     WO-A1-2009/156347**
**US-A1- 2003 136 946     US-A1- 2012 142 808**

Remarks:
The file contains technical information submitted after the application was filed and not included in this specification

**Description**

*Background of the invention*

The present invention , as defined in the appended claims, relates to a composite system comprising a polymer matrix and nanoparticles, to a process for preparing said system and to uses of said system. In particular, the composite system of the present invention comprises a polymer matrix that includes a uniform and random dispersion of polymer or/and inorganic nanoparticles, the nanoparticles are of the core-shell type and have a polymer or/and inorganic core and at least one shell that preferably is a polymer.

*Description of the prior art*

Nanoparticles or colloidal particles (for simplicity, all of them are referred to here as nanoparticles) can be used as fillers, generally functional fillers, in polymer matrices to produce polymer matrix/nanoparticle composites (PMNCs) with particular properties.
Examples of application of PMNCs are e.g.:

- WO 2009/156348 and WO 2009/156347 that disclose a light diffuser obtained from a transparent polymer matrix that includes a dispersion of inorganic nanoparticles; very stringent requirements for the polymer matrix and the dispersed nanoparticles are set.
- US 7,033,524, that relates to composites obtained from annealed core-shell nanoparticles that optionally are void to incorporate further materials; in particular polypyrrole particles are provided with a shell and annealed to provide a conductive film.

The PMNCs have potential applications in various fields such as in optics, optoelectronics, magneto-optics, mechanical enhancement, etc. For most of these applications, the major and critical requirement is that the nanoparticles have to be uniformly and randomly distributed within the polymer matrix. This has been shown in literature to be extremely difficult to perform, not only in large commercial scale productions but also in lab-scale experiments, because nanoparticles always tend to aggregate during their integration into polymer matrices.

*Summary of the invention*

It is an aim of the present invention to solve the above problems and to provide a method for preparing a nanocomposite system in which a polymer matrix has a uniform distribution of nanoparticles.
With the wording *"uniform distribution"* it is meant that nanoparticles are homogeneously distributed within a polymer matrix, i.e. with an average density which is virtually constant across the system, wherein said average density is measured over volumes larger than 0.1 $mm^3$, namely over volumes of 1 $mm^3$.
It is a further aim of the invention to have a random distribution of the nanoparticles; with the wording *"random distribution"* it is meant that there is no aggregation of nanoparticles, or minimal aggregation of nanoparticles, wherein by aggregation it is meant the formation of clusters of packed nanoparticles which can be much smaller than the 0.1 $mm^3$ of above, as for example the case of clusters of hundreds, or tens, or even few nanoparticles only.
Aggregation is an important problem, in particular in optical applications of nanoparticles in PMNCs. In fact, independently from the capability of the observer of visually resolving the size of the cluster, the optical interference effect arising due to the contact of several nanoparticles dramatically modifies the scattering properties of the final composite material, the cluster behaving as a new particle whose size is substantially larger than the primary nanoparticle size. Notably said modifications might be relevant even in the presence of very few clusters since the efficacy of the scattering increases dramatically with the increase of the said cluster size (for example it increases with the 6th power of the size in the Rayleigh regime).
As a consequence one of the aims of the present invention is to avoid the formation of clusters wherein several nanoparticles are in contact one another. More precisely the scope is to guarantee the existence of a minimum distance between the surfaces of any two neighbouring nanoparticles, this distance being at least 0.2, preferably 0.5, most preferably 0.7 times the nanoparticle size. In the case of nanoparticles having core and shell structure, the size of the nanoparticle is measured as the size, i.e. the dimension, of the core. According to the present invention, the nanoparticles are spaced by a distance that is at least 10 nm, preferably 30nm, more preferably 50nm: this result could not be achieved by means of the prior art methods and systems.
A further aim of the invention is also to guarantee that, in the event of the formation of a region in the composite system wherein the nanoparticles are positioned as close as possible one another, the distance between neighbouring nanoparticles is not only larger than a minimum value, preferably the cited 10 nm, but varies randomly within a distribution above said minimum, for example between 0.2 and 0.7 times the nanoparticle size. In fact said randomness in the nanoparticle distance might quench the coherence among scattering contributions from different nanoparticles and thus further contribute in hindering the appearance of optical interference effects. In other terms, one of the aims of the invention is to guarantee both a minimum distance between the nanoparticles surface and, the fact that in the presence of a cluster the actual distance between neighbouring nanoparticles follows a random distribution above said minimum value.

With the wording *"uniform and random distribution"* it is meant a combination of the above definitions, whereby nanoparticles are distributed within a polymer matrix in a statistically disordered manner, without agglomeration among them and without any correlation in their respective position.

It is a further aim of the invention to provide a polymer matrix/nanoparticle composite material that is suitable to be used for the production of a light diffuser that can chromatically separate white visible light into at least two chromatic components: one in which the blue component is dominant and one in which the blue component is low. The diffuser of the present invention should be able to perform the same function of the diffuser disclosed in the above mentioned application WO 2009/156348.

*Description of preferred exemplary embodiments*

These aims are reached by the present invention, that provides a light diffuser comprising a composite system according to claim 1.

The system comprises a polymer matrix that includes nanoparticles; the polymer material used for preparing the matrix is a material that *per se* is transparent and does not absorb light, i.e. the polymer matrix without nanoparticles is transparent and does not absorb light. The nanoparticles are core-shell nanoparticles, the core of the nanoparticles is made of a material that is different from the polymer matrix and has a refractive index that is different from the refractive index of the matrix to provide a scattering of at least a portion of the light transmitted through said system or a product containing said system. Preferably, the core is made of one or more materials that do not absorb light. However, in certain embodiments the possibility of using cores made of materials which absorb light is admitted. In a preferred embodiment, the core material is selected from a polymer, optionally cross-linked, an inorganic material, preferably metal oxides such as $TiO_2$, $SiO_2$, $ZnO$, $ZrO_2$, $Fe_2O_3$, $Al_2O_3$, $Sb_2SnO_5$, $Bi_2O_3$, $CeO_2$, or a combination of thereof.

At least part of the shell of the nanoparticles is obtained from the same material, e.g. a monomer or a polymer, as that used for preparing said polymer matrix or obtained from a monomer or polymer compatible with said matrix. The polymer of the shell might be cross linked.

The polymer matrix/nanoparticle composite system above disclosed preferably provides a Rayleigh scattering or a Rayleigh-like scattering of at least a portion of the transmitted light.

In the present application a *"composite system"* is used to define (and protect) both the final PMNC product and the separate starting materials, the polymer for the matrix and the nanoparticles to be dispersed therein.

With the wording *"compatible"* it is meant a monomer or a polymer that is completely dispersible or soluble in the matrix before the matrix is polymerized. Preferably, the shell or at least part of it, is made of a polymer of the same type of the matrix, e.g. PMMA (poly-methylmethacrylate) for both the shell and the matrix; this will enable an excellent dissolution of the shell and dispersion of the nanoparticles in the matrix before polymerizing and optionally cross-linking the matrix.

The polymer material used for preparing the matrix is not absorbing and transparent, i.e. the final matrix, without nanoparticles, is made of a material in which the transmission of light is essentially regular and which has a high transmittance in the visible region of the spectrum. The same preferably applies to the material used for the shell, too.

The matrix can have any shape and can be made of any material that can be used for the purpose and that has the above mentioned properties of being transparent and not light absorbing. Exemplary embodiments of a matrix are a panel, e.g. in PMMA or other polymer, a film and a paint, namely the layer that remains on the substrate after the paint has been applied and the solvent has evaporated.

The dimensions of the nanoparticles are small enough to provide a Rayleigh scattering of the type discussed and disclosed e.g. in WO 2009/156348; exemplary average dimensions of the core of the nanoparticles are in the range of 10 to 240 nanometers.

The composite system is said to be a Rayleigh-like diffuser if said system or at least a portion of it produces a haze, as defined in the ASTM Designation E284-09a, which is at least 1.5 times larger, preferentially 2 times, more preferentially 3 times, for an impinging light in the spectral interval 400-450 nm than in the interval 600-650 nm, said property being verified for at least one direction of the impinging light beam with respect to the composite system, and wherein by a portion of composite system it is meant, for example, a thin slice if the system is shaped as a bulk solid material or a thin layer if the system is for example a liquid coating or paint.

In fact in the case of thick samples, for example a large tin of paint, multiple scattering can hinder the property of preferentially scattering the short wavelength component of the impinging light with respect to the longer one. Notably the Rayleigh like scattering property appears when a sufficiently thin layer of material is used, where multiple scattering does not occur.

In the present description, unless differently and specifically defined, the meaning of terms and words is to be referred to ASTM E284 - 09a and to the following standards (as long as they are not in contrast with ASTM E2884-09a): ASTM D1746 - 09; ASTM D 1003 - 07; ISO 13468-2:1999(E);

The core of the nanoparticle can be a linear polymer, or a cross-linked polymer or an inorganic material. In an exemplary embodiment the core is made of a cross-linked polymer; in any case, as mentioned, the core material has a refractive index that is different from the refractive index of the polymer of the matrix, said matrix being made of transparent materials that do not absorb light

The nanoparticle of the invention preferably has at least one shell substantially surrounding the core and made of a material (usually a polymer) that is suitable to act as a "sacrificial shell" and to provide a dispersion of the nanoparticle in the material of the matrix. To this purpose, the shell might be a linear (i.e. not cross-linked) polymer.

In a preferred embodiment, the nanoparticle has a first shell that is cross-linked and at least a second shell, externally to the first shell, that is not cross-linked. The second shell is usually obtained in a second step of production of the nanoparticle. At least said second shell is obtained from the same monomer or polymer that is used for preparing said polymer matrix, or from a monomer or polymer compatible with polymer that is used for preparing the polymer matrix , so as to enhance random and uniform dispersion of the nanoparticles in the the matrix before matrix polymerization and/or crosslinking.

In an exemplary embodiment of the polymer matrix/nanoparticle composite (PMNC) according to the present invention, the core is made of cross-linked polystyrene, the first, cross-linked, shell is made of polymethyl methacrylate (PMMA) and the second shell, as well as the matrix, are made of polymethyl methacrylate (PMMA).

The dimensions of the shell, either with a single or multiple layers, are dependent on the minimum distance required between the external surfaces of two adjacent cores in the final composite material. For example, if the required minimum surface-to-surface distance for the core is $l$, the first shell thickness is $l/2$. As a matter of fact, embodiments are possible where the shell is thinner than what required by the minimum distance between nanoparticles. But nevertheless said shell works to statistically keep nanoparticles apart and prevent aggregation, e.g. for the case of fairly dilute PMNCs.

Suitable materials for the core nanoparticles are polycarbonate, polyester resins, polystyrene, poly(styrene-acrylonitrile), polytetrafluoroethylene, modified polytetrafluoroethylene resins, polyvinylchloride, polyvinylidenefluoride and inorganic materials. Preferred inorganic materials are selected from metal oxides such as $TiO_2$, $SiO_2$, $ZnO$, $ZrO_2$, $Fe_2O_3$, $Al_2O_3$, $Sb_2SnO_5$, $Bi_2O_3$, $CeO_2$, or a combination of thereof. A preferred metal oxide is $TiO_2$.

Suitable materials for the shell and matrix are resins having excellent optical transparency selected from thermoplastic, thermosetting and photocurable resins. Suitable resins are in particular acrylic resins (e.g. PMMA), epoxy resins, polyester resins such as polyethylene or polybutylene terephtalates and polycaprolactone; polystyrene resins (e.g. Polystyrene); PTFE and similar fluorinated resins and fluorene resins; polyamide resins (e.g. nylon); polyimide resin; polycarbonate; polysulfone; polyphenylene ethers; polyvinylalcohol resins; vinyl acetate resins; polyether sulfone; amorphous polyolefins; polyarilate; liquid crystal polymers.

In a certain embodiment, the composite system is made as a rigid and self-sustaining panel, *i.e.* a panel which substantially does not bend when suspended horizontally from any two sides. For example, a said composite system might be shaped as a parallelepiped featuring a thickness in the rage 0.5 - 5% of its length, wherein thickness and length are here defined as the smallest and largest side of the panel, respectively. A typical length of said rigid panel is in the range 0.5 - 3 m. A preferred molecular weight for the linear polymer of the matrix is in the range of 450.000 to 2.000.000 g/mol.

In a further embodiment, the composite system is made as a foil, here defined as a rigid but not self-sustaining panel, *i.e.*, a panel which, in analogy with the rigid panel, is not flexible (*i.e.* it breaks when it is bended along short-curvature angles, e.g. when it is bended by 180°) but which does not keep its shape when suspended horizontally. For examples, foil composite systems might have thickness smaller than 0.005 times the length. In analogy with the rigid panel case, foils might feature a matrix made of a polymer of high molecular weight.

According to still another embodiment of the invention, the composite system is made as flexible film, here defined as non-rigid sheet, *i.e.* a sheet which does not break when it is bended along short-curvature angles, *e.g.* when it is bended by 180°. For example, a flexible-film composite-system might have thickness in the range from 10 micron to 1mm, preferentially from 50 micron to 0.5 mm. In addition, it might comprise a plastifer and/or a polymeric shock absorber and/or a co-polymer made from a plurality of different monomers tailored in order to achieve the desired flexibility.

In a preferred embodiment, the composite system is configured as a sky-sun diffuser *i.e.* a diffuser capable of separating an impinging white light into a bluish diffused and a yellowish transmitted component, as the sky does with the white impinging sunlight. More generally, said composite system might contain a number of nanoparticles per unit area which suffices to guarantee that at least a few % (*e.g.* 5%) of an impinging white light is scattered by the system in Rayleigh-like regime. For example, the composite system might be shaped as a rigid panel, or a foil or a flexible film and, independently from the thickness, it might feature a nanoparticle areal density, namely the number N of nanoparticles per square meter, i.e. the number of nanoparticles within a volume element delimited by a portion of the panel, foil or film surface having an area of 1 m$^2$, wherein N satisfies the condition N≥N$_{min}$, e.g. 2N$_{min}$≤N≤13N$_{min}$, preferably N is in the range 3N$_{min}$ to 10N$_{min}$, most preferably N≈6N$_{min}$ and wherein:

$$N_{\min} = \upsilon \frac{10^{-29}}{D^6} \cdot \left| \frac{m^2 + 2}{m^2 - 1} \right|^2$$

wherein $\upsilon$ is a dimensional constant equal to 1 meter$^6$, N$_{min}$ is expressed as a number/meter$^2$, the effective diameter *D,* which is given by the nanoparticle diameter times the matrix refractive index, is expressed in meters and wherein *m* is equal to the ratio of the refractive index of the nanoparticle core to the refractive index of the matrix material.

In another, different, embodiment, the composite system is made as a paint, i.e. as a dispersion of resins and additives in a solvent, *e.g.* in an organic or aqueous solvent. In the typical case, the paint composite system features a nanoparticle concentration (*i.e.* a number of nanoparticles per unit volume) such to guarantee that the condition N≥N$_{min}$, *e.g.* 2N$_{min}$≤N≤13N$_{min}$, preferably 3N$_{min}$≤N≤10N$_{min}$, most preferentially N≈6N$_{min}$, is fulfilled for a paint layer that after drying has a thickness in the range 1 - 50 microns. Typical embedding matrix for said systems are polymers such as PET, PVC, EVA and similar, for the case of films, and polymers such as acrylics, vinylics, polyurethane and similar for the case of paints.

In some embodiments, and particularly when the system is shaped as a panel, a foil or a film, showing a surface of size much larger than the system thickness, the request for the system of exhibiting a visually uniform Rayleigh like scattering across the surface translates in having an average areal density N, measured over areas larger than of 0.25 mm$^2$, which is substantially constant across the surface. Notably this feature does not necessarily require the nanoparticles volume density to be constant across the sample since any fluctuation or variation of the nanoparticles volume density in the direction perpendicular to the surface is not perceived, since the observer only perceives the integrated effect.

In a further embodiment, the composite system is made as a complex-shape elongated object, *i.e.* an object whose shape differs from the parallelepiped and is such that the smallest circumscribed ellipsoid has a flattening *f* > 0.5, where *f = (a-b)/a,* wherein *a* is the semi-major axis and *b* is the semi-minor axis; said elongation is suitable in order to allow different portions of the same object to scatter light with different colours, as the sky does during sunset or sunrise, etc.

In a different embodiment the sandwiched sky-sun diffuser might comprise two glass external layers and an central layer shaped as a film comprising a dispersion of nanoparticles in an polymer matrix in order to obtain a new glass panel or window which behaves both as a safety glass for what concerns the mechanical properties and as a Rayleigh like diffuser for what concerns the optical properties. In addition, said sandwiched sky-sun diffuser might also comprise two layers of adhesive materials which might optically and/or mechanically match the composite system internal layer with the external layers, *i.e.* prevent multiple reflections and provide the elasticity required to compensate for different thermal expansion of internal and external layers. Suitable adhesive materials are EVA (ethylene vinyl acetate) and PVB (Polyvinyl butyral).

A different object of the present invention is a painted sky-sun diffuser, *i.e.* a structure comprising a transparent panel, *e.g.* glass, polycarbonate, or similar material, coated by the composite-system paint as above discussed.

Both the sandwiched and the painted sky-sun diffuser provide an important advantage with respect, *e.g.,* to the bare composite-system panel or foil, given by the superior fire retardant properties, which are substantially defined by the characteristics of the external substrate instead of the composite system itself.

A still further object of the invention is a process for preparing a light diffuser comprising a polymer matrix/nanoparticle composite (PMNC), according to claim 8

Preferably the core of the nanoparticles is made of a polymer (e.g. polymer B) that can also be cross-linked; a preferred preparation process for the core nanoparticle is through emulsion polymerization in an aqueous solvent.

In general, initially the type of nanoparticles and the type of polymer matrix are selected; then the first step in the process is to prepare the core-shell nanoparticles, where the core and shell are the chosen nanoparticle and polymer matrix, respectively. Each core-shell nanoparticle contains only one core, and the thickness of the shell depends on the minimum requirement of the interparticle distance in the PMNC. As mentioned for example, if the required minimum surface-to-surface distance for the core is *l*, the shell thickness is *l/2 (i.e. 0.5 l).*

Any of the known different techniques to make the shell for the core nanoparticle, such as physical coating or adsorption can be used. A preferred preparation process for the core nanoparticle is through emulsion polymerization in an aqueous solvent. Emulsion polymerization is preferred also because it is possible to use the same reactor first to prepare the core nanoparticles and then to provide them with a shell (in one or two layers).

In general, the starting nanoparticles could be a cross linked polymer, e.g. polystyrene or other polymers, previously obtained in a known way by emulsion polymerization with the required dimensions.

To prepare a shell with two layers, the feeding time for the first shell layer is in general from 2 to 10 hours; the amount of cross linker for the first shell is 1% to 10% by weight (w/w). The feeding time for the second shell is from 2 to 10 hours, the second shell preferably being without cross linker to dissolve in the matrix material, monomer and/or polymer.

Any conventional initiators for free-radical emulsion polymerization can be applied here. The amount of the initiator for the first shell is 0.1% to 0.5% of the total monomer, and part of the initiator is injected at the beginning and the remaining part is fed continuously together with the monomer. The amount of the initiator for the second shell is 0.1% to 0.5% of the total monomer, and part of the initiator is injected at the beginning and the remaining part is fed continuously together with the monomer.

The core-shell nanoparticles thus obtained are separated from the aqueous medium in which they have been prepared, e.g. by drying.

Any suitable process for treatment of the nanoparticles obtained after the emulsion is finished and the core-shell nanoparticles are ready may be used to prepare the polymer matrix/nanoparticles system. If a film is required, direct drying and melting is used, otherwise the nanoparticles are coagulated and dried. The dry nanoparticles can be dispersed in the material e.g. a monomer and/or a polymer, that will form the bulk of the final matrix, and subsequently polymerized in a known way. Alternatively, the obtained nanoparticles can be dispersed in a matrix containing polymers, an example of this embodiment of the invention is a paint or an ink that comprises a plurality of nanoparticles. In a composite system that is represented by a paint or ink comprising the invention nanoparticles, the matrix is formed by the resins, additives and solvents normally present in such products, to which the invention nanoparticles have been added. The resulting product is a "preliminary system", i.e. the paint or ink usually does not provide the required scattering when it is in a tin or similar container, but the scattering effect will be provided as soon as a layer of paint or ink has been applied to a transparent substrate.

In general the concentration of nanoparticles in the final product is in the range of 0.001% to 20% by weight, according to the requirement of the final composite product and according to the nature of the nanoparticles; in general, the required amount of nanoparticles having a core at least in part inorganic is much less than the amount required for polymer-core nanoparticles.

In a preferred embodiment, the core of the invention's core-shell nanoparticle comprises either a single inorganic nanoparticle or a cluster of inorganic nanoparticles or a cluster of inorganic nanoparticles and a polymer, depending on the size of said inorganic nanoparticles. In the case of the core composed of a cluster of inorganic nanoparticles and a polymer, preferably, the polymer is cross-linked to form an "integral" core together with the inorganic nanoparticles, and the overall dimensions of the core are within the above mentioned ones.

In a preferred embodiment the inorganic nanoparticles are metal oxides as above mentioned, e.g. and preferably $TiO_2$. The $TiO_2$ component, which has a high refractive index, contributes for efficient light scattering, the polymer portion of the core coats the inorganic particles and provides a first shell of cross-linked polymer around the $TiO_2$ particles. In this embodiment, the polymer used for the core extends outside the core to provide a first shell that is cross-linked.

Preferably, an outer shell of a linear polymer helps to increase the compatibility and re-dispersibility of the composites with an organic solvent.

Core-shell nanoparticles as above discussed with reference to the process and to the PMNC system, are therefore an object of the present invention; in particular core-shell nanoparticles having a cross-linked core, a first, internal, shell that is cross-linked and a second external shell that is a linear polymer, i.e. a not cross linked polymer, external to the cross-linked shell layer.

A preferred embodiment of the invention is the polymer matrix/nanoparticle composite (PMNC) system in which the material of the core of the nanoparticles has a refractive index that is different from the refractive index of the material of the matrix and wherein the dimensions of the core of the nanoparticles are small enough to provide a Rayleigh like scattering e.g. a scattering like the one described in patent application WO 2009/156348 i.e. a scattering process which preferentially diffuses the short-wavelength component of the impinging light with respect to the long one. Exemplary average dimensions of the core of the nanoparticles are in the range of 10 to 240 nanometers, preferentially 30 to 150 nanometers, more preferentially 50 to 100 nanometers.

These PMNCs were surprisingly found to provide excellent light diffusers, capable of chromatic separation as per above mentioned applications.

The present invention provides several advantages over the prior art.

By providing a shell of the selected polymer it is possible to greatly facilitate the uniform and random dispersion of the core nanoparticles in the matrix. By providing a compatible cross linked shell it is possible to maintain the cores separated by the correct distance also in the final matrix; this is ensured especially by having a first layer of cross-linked polymer with the required thickness, e.g. *l*/2 if the final distance between two adjacent cores must be *l*. The additional second layer of non cross-linked polymer, identical to the polymer used for the matrix, will act as a carrier for the core and cross-linked first shell; in a case where the matrix is initially liquid, the "sacrificial shell" dissolves in the monomer of the matrix to thus "transport" the nanoparticles into it and ensure an excellent distribution of the nanoparticles in the final PMNC product.

The invention will now be further disclosed with reference to the following examples and explanations.

**Example 1 - Preparation of PTFE-core nanoparticles.**

Polymerization was carried out in a glass reactor equipped with a reflux condenser, magnetic stirrer (200-300 rpm), nitrogen inlet, and a water jacket for temperature control. The formulation is given in Table 1. In particular, the initial reactor charge was purged with nitrogen to remove dissolved oxygen while heated, followed by addition of a part of the initiator solution. The monomer mixture and the remaining initiator solution were then fed to the reactor over a prescribed period of time (e.g., 3.5 hours) by a pump, respectively.

The reactor temperature was kept at $80\pm2$ °C during the polymerization. At the end of the monomer feeding, the reaction system was maintained at 85 °C for 1 hour to complete the monomer conversion. Then, the system was cooled down to 40 °C, and its pH was adjusted to 7. The final latex was filtered with a filter of 25 micron openings to remove any possible coagulum formed during the polymerization.

**Table 1** Typical recipe for emulsion polymerization of PTFE-MMA/BA particles for sky-sun diffusers.

|  | Chemicals | Weight (g) | Note |
|---|---|---|---|
| **Monomer feed** | MMA | 50-100 | The MMA/BA ratio depends on Tg |
|  | BA | 0-50 |  |
| **Initial reactor charge** | **$H_2O$** | 125 |  |
|  | $NaHCO_3$ | 0.3 |  |
|  | Surfactant (K30) | 0.5 |  |
|  | PTFE latex | 30 ($\phi_{wt}$=33%) |  |
| **Initiator solution** | KPS | 0.35 |  |
|  | $H_2O$ | 24 |  |
| **Total** |  | 275 ($\phi_{wt}$=40%) |  |

**Example 2** - **Preparation of polystyrene-core nanoparticles.**

Cross linked polystyrene latex with nanoparticle size of 65 nm (diameter measured by dynamic light scattering) was used for seeded emulsion polymerization.

1650 g polystyrene latex, 800 g water, 6 g SDS (surfactant, sodium dodecyl sulfate) and 1.6 g KPS, (potassium persulfate, initiator) were charged in the reactor under mechanical stirring. Then 285 g of MMA mixed with 15 g of cross linker (5% w/w of cross linker DTTA, di-trimethylolpropane-tetraacrylate) was slowly added to the reactor within 3 hours at 80°C. The system was kept at 80°C for another 2.5 hours to finish the first shell.

Then, 300 g MMA and 1.4 g KPS were added and fed at 80°C during two hours; the mixture was heated for another 1 hour to finish the reaction and was then cooled to room temperature. The average size of the nanoparticles was found to be 90 nm, with narrow distribution, and the solid content was about 28% by weight. After polymerization, the latex was mixed with an ion exchange resin and stirred for 2 hours to remove the surfactant.

**Example 3 - Preparation of inorganic cores for core-shell nanoparticles.**

The following steps were carried out.

1. Synthesizing $TiO_2$ particles in organic solvent under relatively low temperature.

In a typical process, precursor $TiCl_4$ is dropwise added into ethanol. After the heat production is released completely, the mixture is poured into pre-heated benzyl alcohol. The system is maintained by stirring and heating for more than 8.5 hours. When the hydrolysis process finishes, $TiO_2$ nanocrystallized particles are thoroughly precipitated by adding ether, followed by centrifugation and re-dispersion in ethanol.

2. Hydrophobic modification of $TiO_2$.

$TiO_2$ primary particles form nanoclusters in ethanol. To make them compatible with organic solvents, silane coupling agent is added and chemically attaches to the surface of the clusters. Excess silane is removed by centrifuging. The treated nanoclusters are then used to prepare core-shell nanoparticles.

### 3. Preparation of core-double-shell structure

The modified $TiO_2$ nanoclusters are well dispersed in a mixture of monomer (e.g., methyl methacrylate or styrene) and cross linker (e.g., ditrimethylolpropane tetraacrylate or divinylbenzene). The dispersion is dropwise added, under stirring and $N_2$, to an aqueous solution of the steric surfactant, forming a homogeneous mixture with the assistance of sonication or mechanical separation. After nitrogen purging and mechanical stirring, an aqueous solution of the initiator (potassium persulfate) is introduced into the system and the first emulsion polymerization is carried out, while the $N_2$ bubbling and stirring are still maintained.

After the first layer has been polymerized and cross-linked, the second linear shell is provided on the external surface of the nanoparticles. For this second linear shell, a monomer is fed continuously at a low feeding rate, and corresponding amount of initiator is added, without using a cross-linking agent. After the second polymerization process is completed core-shell nanoparticles of the invention are obtained from aqueous phase by freezing. There are two main processes for post-treating the nanoparticles obtained according to the invention: direct drying and melting for preparing a film, and coagulation and drying for preparing a PMNC system by redispersion in a monomer.

### Technique A: Direct drying and melting

If the PMNCs are required in the form of films, the typical techniques for making films from polymer latexes can be used. In particular, the obtained core-shell nanoparticles latex can be dried directly to eliminate water, and then the temperature is increased to above the Tg (glass transition temperature) of the polymer constituting the shell, leading to the formation of the PMNCs in the form of films.

### Technique B: Powder moulding

This technique includes two steps:

*Step 1: Coagulation of the core-shell particles*

Coagulation or aggregation methods are used to separate the core-shell nanoparticles from the disperse medium. A coagulation process leads the core-shell nanoparticles to form clusters or aggregates with sizes from at least a few tens of microns to hundreds of microns or even to millimetres, thus easy to be separated from the disperse medium by any standard techniques such as filtration, floatation, sedimentation, centrifugation, etc.

Due to the advantage of the core-shell structure, within the dried clusters or aggregates or powders, the minimum distance among the nanoparticles is maintained by the designed thickness of the shell. To ensure the uniform and random distribution of the nanoparticles within the clusters, coagulation under shear is preferred, since it forms compact clusters with randomly distributed particles. In particular, three types of coagulation are preferred:

a) Coagulation of latexes in mechanically stirred tanks with addition of a proper amount of electrolytes. The electrolytes can be chosen amongst any salts or base or acid. The use of the electrolytes is required to partially or completely eliminate the electrostatic repulsive interactions among the particles so as to ease the coagulation.

b) Coagulation of latexes in intense shear flow without making use of electrolytes. In this case, the energy generated by the intense shear flow should be high enough, capable of forcing the particles to overcome the interaction barrier, leading to aggregation. Typical processes that are able to generate so high energies are, for example, forcing the latexes to pass through a microchannel, as described in the open literature (Wu H, Zaccone A, Tsoutsoura A, Lattuada M, Morbidelli M. High shear-induced gelation of charge-stabilized colloids in a microchannel without adding electrolytes. Langmuir. 2009; 25:4715-23).

Further, if there are specific requirements for the nanoparticle concentrations within the PMNCs, which cannot be satisfied only by the produced thickness of the shell, then, particles of the same materials as the shell (i.e., the same as the polymer matrix), but without the nanoparticle core, are produced using the same emulsion polymerization technique. The obtained latex where the particles do not contain the nanoparticle core will be mixed with the latex where the particles contain the nanoparticle core, in proper ratios based on the requirements in the nanoparticle concentration. The obtained latex mixtures are then coagulated using the techniques described above, so as to produce the dried powders. c) Coagulation by freezing.

The latex of example 2 was stored in a freezer at -18°C. After defreezing the latex, the mixture was centrifuged.

The solid wet powder was recovered and dried.

*Step 2: Preparation of the composite.*

The nanoparticle powder thus obtained is then used for preparing the required matrix composite. After having obtained the dried powders where the nanoparticles are distributed, with the required minimum distance among the nanoparticles core being ensured by the presence of the shell, various standard techniques can be used to easily produce the desired, different forms of the PMNCs.

A preferred technique is bulk polymerization, in which the nanoparticles powder is weighed and dissolved in the monomer of the matrix, before crosslinking it. Re-dispersion is carried out so as to obtain a uniform dispersion of the nanoparticles, that is ensured thanks to the presence of one or, preferably, two layers of the shell; proper agitation and/or use of ultrasonic energy may be advantageous.

For example, the powder obtained after freezing and drying the nanoparticles of example 2 was weighed and dissolved in MMA. The transparent dispersion was sonicated for 2 hours to get the nanoparticles well dispersed in MMA. A standard bulk polymerization technique was used to convert the monomers into the polymer matrix, in which the nanoparticles are homogeneously distributed, leading to the required PMNCs.

Other techniques may be used, such as injection moulding, reaction injection moulding, compression moulding, transfer moulding, extrusion moulding, rotomoulding, blow moulding, calendering, knife coating, etc. This possibility of having a starting material that can undergo many different treatments is one of the key advantages of the present invention.

In another embodiment, nanoparticles having a core with the required refractive index, with or without a polymer, and a non cross-linkedshell, are dispersed in a matrix and sonicated until they reach the required uniform dispersion. The matrix is then polymerized and optionally cross-linked.

## Claims

1.  A light diffuser comprising a composite system (PMNC), comprising a polymer matrix that contains a plurality of nanoparticles, wherein said polymer matrix is prepared from a material that *per se* is transparent;
    said nanoparticles are core-shell nanoparticles;
    the core of the nanoparticles
    has average dimensions in the range of 10 nm to 240 nm,
    is made of a material that

    is different from the polymer matrix material,
    does not absorb light and
    has a refractive index that is different from the refractive index of the polymer of the matrix

    to provide a scattering of white visible light transmitted through said system or a product containing said system so as to chromatically separate white visible light into at least two chromatic components: one in which the blue component is dominant and one in which the blue component is low, and
    wherein at least part of the shell of the said nanoparticles is obtained from the same monomer or polymer that is used for said polymer matrix, or is obtained from a monomer or polymer compatible with said matrix,
    **characterized in that**
    the nanoparticles are uniformly and randomly distributed within the polymer matrix and **in that**
    the minimum distance between the surfaces of the cores of any two neighbouring nanoparticles is at least 10 nm and at least 0.2 times the nanoparticle size.

2.  A light diffuser according to claim 1, wherein the material of said core is selected from polymers and inorganic compounds.

3.  A light diffuser according to claim 1 or 2, wherein said shell is cross-linked.

4.  A light diffuser according to any previous claim, wherein the concentration of nanoparticles in the final product is in the range of 0.001% to 20% by weight.

5.  A light diffuser according to any claim 1 to 4, wherein the number of nanoparticles within a volume element delimited by a portion of the panel, foil or film surface having an area of 1 $m^2$, is N, wherein $N \geq N_{min}$, preferably $2N_{min} \leq N \leq 13N_{min}$, more preferably N is in the range $3N_{min}$ to $10N_{min}$, most preferably $N \approx 6N_{min}$ and wherein:

$$N_{\min} = \upsilon \frac{10^{-29}}{D^6} \cdot \left| \frac{m^2 + 2}{m^2 - 1} \right|^2$$

where $\upsilon$ is a dimensional constant equal to 1 meter[6], $N_{\min}$ is expressed as a number/meter[2], the effective diameter $D$, which is given by the nanoparticle diameter times the matrix refractive index, is expressed in meters and wherein $m$ is equal to the ratio of the refractive index of the nanoparticle core to the refractive index of the matrix material.

6. A light diffuser according to any previous claim, wherein said core is made of cross-linked polystyrene, said matrix and said shell layers are made of polymethylmethacrylate (PMMA).

7. A light diffuser according to any claim 1 to 6, wherein said core is made of an inorganic material, selected from metal oxides, most preferably from $TiO_2$, $SiO_2$, $ZnO$, $ZrO_2$, $Fe_2O_3$, $Al_2O_3$, $Sb_2SnO_5$, $Bi_2O_3$, $CeO_2$.

8. A process for preparing a light diffuser comprising a composite system configured to provide a scattering of white visible light transmitted through said system or a product containing said system so as to chromatically separate white visible light into at least two chromatic components: one in which the blue component is dominant and one in which the blue component is low; the system comprising a polymer matrixin which a plurality of nanoparticles is dispersed, the polymer matrix being prepared from a polymer material that *per se* is transparent and the nanoparticle cores having average dimensions in the range of 10 nm to 240 nm and being made of a material that does not absorb light, **characterized in** comprising the following steps:

   a) preparing a plurality of nanoparticles of a material (B);
   b) providing said nanoparticles with at least one shell obtained from a monomer or polymer (A) to give a core-shell nanoparticle wherein the material (B) of the core of the nanoparticle is different from the monomer or polymer to be used for the matrix and has a refractive index that is different from the refractive index of the polymer of the matrix;
   c) preparing a first shell comprising a polymer (A) and cross-linking said polymer of the first shell;
   d) providing said core-shell nanoparticle with an additional shell, said additional shell comprising a polymer that is not cross-linked;
   e) dispersing said core-shell nanoparticles into the monomer or polymer from which said matrix will be obtained, said monomer or polymer of the matrix being the same as or being compatible with said monomer or polymer of the additional shell, so as to obtain a dispersion of the nanoparticles in the matrix before polymerization;
   f) polymerizing the matrix, and
   g) optionally cross-linking the matrix.

9. A process according to claim 8, wherein said matrix is a paint comprising polymer resins and at least a solvent, and wherein said scattering is provided by said polymer matrix/nanoparticle composite system after said solvent has evaporated from a layer of paint.

10. A process according to claim 8 or 9, comprising the step of cross-linking said core of the nanoparticles.

11. A process according to any claim 8 to 10, comprising the steps of preparing a core comprising at least one inorganic nanoparticle and a monomer, polymerizing said monomer and preferably cross-linking it, to provide a core comprising inorganic nanoparticle(s) and a polymer, preferably a cross-linked polymer.

12. A process according to any claim 8 to 11, further comprising the steps of preparing nanoparticles from the monomer or polymer that is used to prepare said additional shell (A), wherein said nanoparticles do not comprise said core material (B), and mixing said core-free nanoparticles with an amount of nanoparticles having a core, whereby said core-free nanoparticles provide a starting material for said matrix.

13. The use of core-shell nanoparticles for the production of PMNC systems of a light diffuser that can chromatically separate white visible light into at least two chromatic components: one in which the blue component is dominant and one in which the blue component is low; the system being, wherein said nanoparticles have a core, a first shell layer that is a cross-linked polymer, and at least a second shell layer, located externally to said first layer, at least said second shell being made of the same polymer that is used for said polymer matrix, or of a polymer compatible with it, the polymer of said second layer being not cross linked.

**14.** The use of a composite system (PMNC) for the production of a light diffuser, the composite system (PMNC) comprising a polymer matrix that contains a plurality of nanoparticles, wherein said polymer matrix is prepared from a material that *per se* is transparent;

said nanoparticles are core-shell nanoparticles;

the core of the nanoparticles
has average dimensions in the range of 10 nm to 240 nm,
is made of a material that

is different from the polymer matrix material,
does not absorb light and
has a refractive index that is different from the refractive index of the polymer of the matrix

to provide a scattering of white visible light transmitted through said system or a product containing said system so as to chromatically separate white visible light into at least two chromatic components: one in which the blue component is dominant and one in which the blue component is low, and
wherein at least part of the shell of the said nanoparticles is obtained from the same monomer or polymer that is used for said polymer matrix, or is obtained from a monomer or polymer compatible with said matrix,
**characterized in that**
the nanoparticles are uniformly and randomly distributed within the polymer matrix and **in that**
the minimum distance between the surfaces of the cores of any two neighbouring nanoparticles is at least 10 nm and at least 0.2 times the nanoparticle size.

**Patentansprüche**

**1.** Lichtdiffusor, umfassend ein Verbundsystem (PMNC), das eine Polymermatrix umfasst, die eine Vielzahl von Nanopartikeln enthält, wobei die Polymermatrix aus einem Material hergestellt ist, das *per se* transparent ist;

wobei die Nanopartikel Kern-Schale-Nanopartikel (Core-Shell-Nanopartikel) sind;
wobei der Kern der Nanopartikel

durchschnittliche Abmessungen im Bereich von 10 nm bis 240 nm aufweist,
aus einem Material hergestellt ist, das

sich vom Polymermatrixmaterial unterscheidet,
kein Licht absorbiert und
einen Brechungsindex aufweist, der sich von dem Brechungsindex des Polymers der Matrix derart unterscheidet,

dass eine Streuung von weißem sichtbarem Licht, das durch das System oder ein Produkt, das das System enthält, geleitet wird, bereitgestellt wird, um weißes sichtbares Licht chromatisch in mindestens zwei chromatische Komponenten zu trennen: eine, in der die blaue Komponente dominant ist, und eine, in der die blaue Komponente gering ist, und
wobei mindestens ein Teil der Schale der Nanopartikel aus demselben Monomer oder Polymer, das für die Polymermatrix verwendet wird, oder aus einem Monomer oder Polymer, das mit der Matrix kompatibel ist, erhalten wird,
**dadurch gekennzeichnet, dass**
die Nanopartikel gleichmäßig und zufällig in der Polymermatrix verteilt sind und dass
der Mindestabstand zwischen den Oberflächen der Kerne von jeweils zwei benachbarten Nanopartikeln mindestens 10 nm und mindestens das 0,2-fache der Nanopartikelgröße beträgt.

**2.** Lichtdiffusor nach Anspruch 1, wobei das Material des Kerns aus Polymeren und anorganischen Verbindungen ausgewählt ist.

**3.** Lichtdiffusor nach Anspruch 1 oder 2, wobei die Schale vernetzt ist.

**4.** Lichtdiffusor nach einem der vorherigen Ansprüche, wobei die Konzentration von Nanopartikeln im Endprodukt im Bereich von 0,001 bis 20 Gew.-% liegt.

**5.** Lichtdiffusor nach einem der Ansprüche 1 bis 4, wobei die Anzahl von Nanopartikeln innerhalb eines Volumenelements, das durch einen Teil der Platten-, Folien- oder Filmoberfläche mit einer Fläche von 1 m$^2$ begrenzt ist, N ist, wobei N≥N$_{min}$ ist, vorzugsweise ist 2N$_{min}$≤N≤13N$_{min}$, noch bevorzugter ist N im Bereich von 3N$_{min}$ bis 10N$_{min}$, am meisten bevorzugt ist N≈6N$_{min}$, und wobei:

$$N_{min} = v\frac{10^{-29}}{D^6} \cdot \left|\frac{m^2+2}{m^2-1}\right|^2$$

ist, wobei u eine Dimensionskonstante gleich 1 Meter$^6$ ist, N$_{min}$ als Anzahl/meter$^2$ ausgedrückt ist, der effektive Durchmesser D, der durch den Nanopartikeldurchmesser mal dem Brechungsindex der Matrix gegeben ist, in Metern ausgedrückt ist und wobei *m* gleich dem Verhältnis des Brechungsindex des Nanopartikelkerns zum Brechungsindex des Matrixmaterials ist.

**6.** Lichtdiffusor nach einem der vorherigen Ansprüche, wobei der Kern aus vernetztem Polystyren hergestellt ist, wobei die Matrix und die Schalenschichten aus Polymethylmethacrylat (PMMA) hergestellt sind.

**7.** Lichtdiffusor nach einem der Ansprüche 1 bis 6, wobei der Kern aus einem anorganischen Material hergestellt ist, das aus Metalloxiden ausgewählt ist, am meisten bevorzugt aus $TiO_2$, $SiO_2$, ZnO, $ZrO_2$, $Fe_2O_3$, $Al_2O_3$, $Sb_2SnO_5$, $Bi_2O_3$, $CeO_2$.

**8.** Verfahren zum Herstellen eines Lichtdiffusors, der ein Verbundsystem umfasst, das dazu eingerichtet ist, eine Streuung von weißem sichtbarem Licht, das durch das System oder ein Produkt, das das System enthält, geleitet wird, bereitzustellen, um weißes sichtbares Licht chromatisch in mindestens zwei chromatische Komponenten zu trennen: eine, in der die blaue Komponente dominant ist, und eine, in der die blaue Komponente gering ist; wobei das System eine Polymermatrix umfasst, in der eine Vielzahl von Nanopartikeln verteilt ist, wobei die Polymermatrix aus einem Polymermaterial hergestellt ist, das *per se* transparent ist, und wobei die Nanopartikelkerne durchschnittliche Abmessungen im Bereich von 10 nm bis 240 nm aufweisen und aus einem Material hergestellt sind, das kein Licht absorbiert, **dadurch gekennzeichnet, dass** es die folgenden Schritte umfasst:

a) Herstellen einer Vielzahl von Nanopartikeln eines Materials (B);
b) Versehen der Nanopartikel mit mindestens einer Schale, die aus einem Monomer oder Polymer (A) erhalten wurde, um ein Kern-Schale-Nanopartikel (Core-Shell-Nanopartikel) zu erhalten,
wobei das Material (B) vom Kern des Nanopartikels sich von dem für die Matrix zu verwendenden Monomer oder Polymer unterscheidet und einen Brechungsindex aufweist, der sich von dem Brechungsindex des Polymers der Matrix unterscheidet;
c) Herstellen einer ersten Schale, die ein Polymer (A) umfasst, und Vernetzen des Polymers der ersten Schale;
d) Versehen des Kern-Schale-Nanopartikels mit einer zusätzlichen Schale, wobei die zusätzliche Schale ein Polymer umfasst, das nicht vernetzt ist;
e) Verteilen der Kern-Schale-Nanopartikel in dem Monomer oder Polymer, aus dem die Matrix erhalten wird, wobei das Monomer oder Polymer der Matrix das gleiche ist wie das Monomer oder Polymer der zusätzlichen Schale oder mit diesem kompatibel ist, um so eine Verteilung der Nanopartikel in der Matrix vor der Polymerisation zu erhalten;
f) Polymerisieren der Matrix und
g) optionales Vernetzen der Matrix.

**9.** Verfahren nach Anspruch 8, wobei die Matrix eine Farbe ist, die Polymerharze und mindestens ein Lösungsmittel umfasst, und wobei die Streuung durch das Polymermatrix/Nanopartikel-Verbundsystem bereitgestellt wird, nachdem das Lösungsmittel aus einer Farbschicht verdampft ist.

**10.** Verfahren nach Anspruch 8 oder 9, umfassend den Schritt zum Vernetzen des Kerns der Nanopartikel.

**11.** Verfahren nach einem der Ansprüche 8 bis 10, umfassend die Schritte zum Herstellen eines Kerns, der mindestens ein anorganisches Nanopartikel und ein Monomer umfasst, Polymerisieren des Monomers und vorzugsweise Vernetzen desselben, um einen Kern bereitzustellen, der anorganische(s) Nanopartikel und ein Polymer, vorzugsweise ein vernetztes Polymer, umfasst.

**12.** Verfahren nach einem der Ansprüche 8 bis 11, ferner umfassend die Schritte zum Herstellen von Nanopartikeln aus dem Monomer oder Polymer, das verwendet wird zum Herstellen der zusätzlichen Schale (A), wobei die Nanopartikel nicht das Kernmaterial (B) umfassen, und Mischen der kernfreien Nanopartikel mit einer Menge von Nanopartikeln mit einem Kern, wodurch die kernfreien Nanopartikel ein Ausgangsmaterial für die Matrix bereitstellen.

13. Verwendung von Kern-Schale-Nanopartikeln (Core-Shell-Nanopartikeln) für die Herstellung von PMNC-Systemen eines Lichtdiffusors, der weißes sichtbares Licht chromatisch in mindestens zwei chromatische Komponenten trennen kann: eine, in der die blaue Komponente dominant ist, und eine, in der die blaue Komponente gering ist; wobei das System eines ist, in dem die Nanopartikel einen Kern, eine erste Schalenschicht, die ein vernetztes Polymer ist, und mindestens eine zweite Schalenschicht, die sich außerhalb der ersten Schicht befindet, aufweisen, wobei mindestens die zweite Schale aus demselben Polymer, das für die Polymermatrix verwendet wird, oder aus einem mit ihr kompatiblen Polymer hergestellt ist, wobei das Polymer der zweiten Schicht nicht vernetzt ist.

14. Verwendung eines Verbundsystems (PMNC) für die Herstellung eines Lichtdiffusors, wobei das Verbundsystem (PMNC) eine Polymermatrix umfasst, die eine Vielzahl von Nanopartikeln enthält, wobei die Polymermatrix aus einem Material hergestellt ist, das *per se* transparent ist;

wobei die Nanopartikel Kern-Schale-Nanopartikel (Core-Shell-Nanopartikel) sind;
wobei der Kern der Nanopartikel

durchschnittliche Abmessungen im Bereich von 10 nm bis 240 nm aufweist,
aus einem Material hergestellt ist, das

sich vom Polymermatrixmaterial unterscheidet,
kein Licht absorbiert und
einen Brechungsindex aufweist, der sich von dem Brechungsindex des Polymers der Matrix derart unterscheidet,

dass eine Streuung von weißem sichtbarem Licht, das durch das System oder ein Produkt, das das System enthält, geleitet wird, bereitgestellt wird, um weißes sichtbares Licht chromatisch in mindestens zwei chromatische Komponenten zu trennen: eine, in der die blaue Komponente dominant ist, und eine, in der die blaue Komponente gering ist, und
wobei mindestens ein Teil der Schale der Nanopartikel aus demselben Monomer oder Polymer, das für die Polymermatrix verwendet wird, oder aus einem Monomer oder Polymer, das mit der Matrix kompatibel ist, erhalten wird,
**dadurch gekennzeichnet, dass**
die Nanopartikel gleichmäßig und zufällig in der Polymermatrix verteilt sind und dass
der Mindestabstand zwischen den Oberflächen der Kerne von jeweils zwei benachbarten Nanopartikeln mindestens 10 nm und mindestens das 0,2-fache der Nanopartikelgröße beträgt.

## Revendications

1. Diffuseur de lumière comprenant un système composite (PMNC), comprenant une matrice polymère qui contient une pluralité de nanoparticules, dans lequel ladite matrice polymère est préparée à partir d'un matériau qui est intrinsèquement transparent ;

lesdites nanoparticules sont des nanoparticules cœur-coquille ;
le cœur des nanoparticules

a des dimensions moyennes dans la gamme de 10 nm à 240 nm,
est formé en un matériau qui

est différent du matériau de la matrice polymère,
n'absorbe pas la lumière et
a un indice de réfraction qui est différent de l'indice de réfraction du polymère de la matrice

pour assurer une diffusion de la lumière visible blanche transmise à travers ledit système ou un produit comprenant ledit système de manière à réaliser une séparation chromatique de la lumière blanche visible en au moins deux composantes chromatiques : une dans laquelle la composante bleue est prédominante et une dans laquelle la composante bleue est faible, et

dans lequel au moins une partie de la coquille desdites nanoparticules est obtenue à partir du même monomère ou polymère que celui utilisé pour ladite matrice polymère, ou est obtenue à partir d'un monomère ou polymère compatible avec ladite matrice,

**caractérisé en ce que**

les nanoparticules sont réparties uniformément et aléatoirement à l'intérieur de la matrice polymère et **en ce que** la distance minimale entre les surfaces des cœurs de deux nanoparticules voisines est supérieure ou égale à 10 nm et supérieure ou égale à 0,2 fois la taille de nanoparticule.

2. Diffuseur de lumière selon la revendication 1, dans lequel le matériau dudit cœur est un polymère ou un composé inorganique.

3. Diffuseur de lumière selon la revendication 1 ou 2, dans lequel ladite coquille est réticulée.

4. Diffuseur de lumière selon l'une quelconque des revendications précédentes, dans lequel la concentration de nanoparticules dans le produit final se situe dans la gamme de 0,001 % à 20 % en poids.

5. Diffuseur de lumière selon l'une quelconque des revendications 1 à 4, dans lequel le nombre N de nanoparticules à l'intérieur d'un élément de volume délimité par une portion de surface de panneau, feuille ou film ayant une superficie de 1 m$^2$ est tel que $N \geq N_{min}$, de préférence tel que $2N_{min} \leq N \leq 13N_{min}$, de préférence encore $N$ est compris entre $3N_{min}$ et $10N_{min}$, de préférence encore est tel que $N \approx 6N_{min}$, et dans lequel :

$$N_{min} = v \frac{10^{-29}}{D^6} \cdot \left| \frac{m^2 + 2}{m^2 - 1} \right|^2$$

où $v$ est une constante dimensionnelle égale à 1 mètre$^6$, $N_{min}$ est exprimé en nombre/mètre$^2$, le diamètre effectif $D$, qui est donné par le diamètre de nanoparticule multiplié par l'indice de réfraction de la matrice, est exprimé en mètres, et dans lequel $m$ est égal au rapport entre l'indice de réfraction du cœur de la nanoparticule et l'indice de réfraction du matériau de la matrice.

6. Diffuseur de lumière selon l'une quelconque des revendications précédentes, dans lequel ledit cœur est en polystyrène réticulé, ladite matrice et lesdites couches de coquille sont en polyméthacrylate de méthyle (PMMA).

7. Diffuseur de lumière selon l'une quelconque des revendications 1 à 6, dans lequel ledit cœur est en un matériau inorganique, choisi parmi les oxydes métalliques, de préférence parmi $TiO_2$, $SiO_2$, $ZnO$, $ZrO_2$, $Fe_2O_3$, $Al_2O_3$, $Sb_2SnO_5$, $Bi_2O_3$, $CeO_2$.

8. Procédé de préparation d'un diffuseur de lumière comprenant un système composite configuré pour assurer une diffusion de la lumière visible blanche transmise à travers ledit système ou un produit comprenant ledit système de manière à réaliser une séparation chromatique de la lumière visible blanche en au moins deux composantes chromatiques : une dans laquelle la composante bleue est dominante et une dans laquelle la composante bleue est faible ; le système comprenant une matrice polymère dans laquelle est dispersée une pluralité de nanoparticules, la matrice polymère étant préparée à partir d'un matériau polymère qui est intrinsèquement transparent et les cœurs des nanoparticules ayant des dimensions moyennes comprises entre 10 nm et 240 nm et étant en un matériau qui n'absorbe pas la lumière, **caractérisé en ce qu'**il comprend les étapes suivantes :

a) préparation d'une pluralité de nanoparticules d'un matériau (B) ;
b) application auxdites nanoparticules d'au moins une coquille obtenue à partir d'un monomère ou d'un polymère (A) pour obtenir une nanoparticule cœur-coquille dans laquelle le matériau (B) du cœur de la nanoparticule est différent du monomère ou polymère destiné à être utilisé pour la matrice et a un indice de réfraction qui est différent de l'indice de réfraction du polymère de la matrice ;
c) préparation d'une première coquille comprenant un polymère (A) et réticulation dudit polymère de la première coquille ;
d) application à ladite nanoparticule cœur-coquille d'une coquille supplémentaire, ladite coquille supplémentaire comprenant un polymère qui n'est pas réticulé ;

e) dispersion desdites nanoparticules cœur-coquille dans le monomère ou polymère à partir duquel ladite matrice sera obtenue, ledit monomère ou polymère de la matrice étant le même que ou étant compatible avec ledit monomère ou polymère de la coquille supplémentaire, de manière à obtenir une dispersion des nanoparticules dans la matrice avant polymérisation ;

f) polymérisation de la matrice ; et

g) éventuellement, réticulation de la matrice.

**9.** Procédé selon la revendication 8, dans lequel ladite matrice est un revêtement comprenant des résines polymères et au moins un solvant, et dans lequel ladite diffusion est assurée par ledit système composite matrice polymère/nanoparticule après l'évaporation dudit solvant d'une couche de revêtement.

**10.** Procédé selon la revendication 8 ou 9, comprenant une étape de réticulation dudit cœur des nanoparticules.

**11.** Procédé selon l'une quelconque des revendications 8 à 10, comprenant une étape de préparation d'un cœur comprenant au moins une nanoparticule inorganique et un monomère, une étape de polymérisation dudit monomère et de préférence une étape de réticulation de celui-ci, pour obtenir un cœur comprenant une/des nanoparticule(s) inorganique(s) et un polymère, de préférence un polymère réticulé.

**12.** Procédé selon l'une quelconque des revendications 8 à 11, comprenant en outre une étape de préparation de nanoparticules à partir du monomère ou du polymère qui est utilisé pour préparer ladite coquille supplémentaire (A), lesdites nanoparticules étant dépourvues dudit matériau de cœur (B), et une étape de mélange desdites nanoparticules sans cœur avec des nanoparticules ayant un cœur, lesdites nanoparticules sans cœur fournissant un matériau de départ pour ladite matrice.

**13.** Utilisation de nanoparticules cœur-coquille pour la production de systèmes PMNC d'un diffuseur de lumière apte à réaliser une séparation chromatique de la lumière visible blanche en au moins deux composantes chromatiques : une dans laquelle la composante bleue est prédominante et une dans laquelle la composante bleue est faible ; système dans lequel lesdites nanoparticules comprennent un cœur, une première couche de coquille en un polymère réticulé, et au moins une deuxième couche de coquille, située à l'extérieur de ladite première couche, au moins ladite deuxième coquille étant formée du même polymère que celui utilisé pour ladite matrice polymère, ou en un polymère compatible avec celle-ci, le polymère de ladite deuxième couche n'étant pas réticulé.

**14.** Utilisation d'un système composite (PMNC) pour la production d'un diffuseur de lumière, le système composite (PMNC) comprenant une matrice polymère qui contient une pluralité de nanoparticules, dans laquelle ladite matrice polymère est préparée à partir d'un matériau qui est intrinsèquement transparent ;

lesdites nanoparticules sont des nanoparticules cœur-coquille ;
le cœur des nanoparticules

a des dimensions moyennes comprises entre 10 nm et 240 nm,
est formé en un matériau qui

est différent du matériau de la matrice polymère,
n'absorbe pas la lumière et
a un indice de réfraction qui est différent de l'indice de réfraction du polymère de la matrice

pour assurer une diffusion de la lumière visible blanche transmise à travers ledit système ou un produit comprenant ledit système de manière à réaliser une séparation chromatique de la lumière blanche visible en au moins deux composantes chromatiques : une dans laquelle la composante bleue est prédominante et une dans laquelle la composante bleue est faible, et
dans laquelle au moins une partie de la coquille desdites nanoparticules est obtenue à partir du même monomère ou polymère que celui utilisé pour ladite matrice polymère, ou est obtenue à partir d'un monomère ou polymère compatible avec ladite matrice,
**caractérisée en ce que**
les nanoparticules sont réparties uniformément et aléatoirement dans la matrice polymère et **en ce que**
la distance minimale entre les surfaces des cœurs de deux nanoparticules voisines est supérieure ou égale à 10 nm et supérieure ou égale à 0,2 fois la taille de nanoparticule.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009156348 A
- WO 2009156347 A
- US 7033524 B

### Non-patent literature cited in the description

- **WU H ; ZACCONE A ; TSOUTSOURA A ; LATTUADA M ; MORBIDELLI M.** High shear-induced gelation of charge-stabilized colloids in a microchannel without adding electrolytes. *Langmuir,* 2009, vol. 25, 4715-23